# EUROPÄISCHE PATENTSCHRIFT

(11) **EP 3 213 973 B1**
(45) Veröffentlichungstag und Bekanntmachung des Hinweises auf die Patenterteilung: **09.12.2020**
(21) Anmeldenummer: 17159217.3
(22) Anmeldetag: 03.03.2017
(51) Int. Cl.: B61D 23/02, B60R 3/00

(54) **ZUSTIEGSSYSTEM FÜR EIN FAHRZEUG**
ENTRY SYSTEM FOR A VEHICLE
DISPOSITIF POUR MONTER DANS UN VEHICULE

(30) Priorität: 04.03.2016 DE 102016103992
(43) Veröffentlichungstag der Anmeldung: 06.09.2017
(73) Patentinhaber: Gebr. Bode GmbH & Co. KG, 34123 Kassel (DE)
(72) Erfinder: Rasekhi, Abbas, 34128 Kassel (DE)
(74) Vertreter: Patentanwälte Bauer Vorberg Kayser

(56) Entgegenhaltungen:
- EP-A1- 2 103 469
- WO-A1-02/079018
- DE-A1-102014 208 288
- DE-U1- 8 815 693

## Beschreibung

Die Erfindung betrifft ein Zustiegssystem für ein Fahrzeug mit den Merkmalen des Oberbegriffs von Anspruch 1.

Zustiegssysteme im hier gegenständlichen Sinne dienen dazu, Fahrgästen eines Fahrzeugs den Ein- und Ausstieg zu ermöglichen bzw. zu erleichtern. Regelmäßig weisen sie eine plattformartige und linear ausfahrbare Zustiegshilfe auf, welche einen Abstand zwischen einem Fahrzeugboden im Innern des Fahrzeugs und einer Plattform außerhalb des Fahrzeugs wie etwa einem Bahnsteig oder einem Bürgersteig überbrücken soll. Insbesondere bei Fahrzeugen des Hochgeschwindigkeitsverkehrs sollen die Fahrgasttüren des Fahrzeugs auch den Innenraum des Fahrzeugs gegenüber der Umgebung zumindest soweit abdichten, dass der Fahrgastkomfort nicht durch eindringenden Lärm oder Druckschwankungen im Innenraum, beispielsweise verursacht durch das Vorbeifahren eines entgegenkommenden Zuges, beeinträchtigt wird. Daher kommt dem Zustiegssystem auch die Aufgabe zu, im geschlossenen Zustand der Fahrgasttür eine solche Abdichtung zu gewährleisten.

Eine weitere Anforderung an solche Zustiegssysteme ist ferner, dass sie einen barrierefreien Zugang erlauben soll. Folglich sind wesentliche Stufen oder ähnliche Kanten auf dem Weg zwischen dem Bahnsteig oder Bürgersteig und dem Fahrzeugboden zu vermeiden. Dies bereitet aber Schwierigkeiten im Zusammenhang mit der oben beschriebenen Abdichtungsfunktion. Denn zwecks Barrierefreiheit wäre es ideal, eine Trittfläche der Zustiegshilfe auf der gleichen Ebene vorzusehen, auf welcher sich auch der Fahrzeugboden befindet. Um das Abdichten weiterhin zu gewährleisten, müsste dann entweder die Zustiegshilfe sehr exakt bündig mit der Unterkante der Türflügel abschließen, was hinsichtlich der Tolerierung problematisch ist. Alternativ könnte die Zustiegshilfe auf Stoß mit dem Türflügel abschließen. Dies ist zwar von der Tolerierung unproblematisch, doch soll zur Fahrgastsicherheit die Zustiegshilfe vor einer Öffnung der Türflügel ausfahrbar und nach einem Schließen der Türflügel einfahrbar sein. Das wiederum wäre bei dieser Variante nicht ohne Weiteres möglich, da z. B. beim Ausfahren der Zustiegshilfe die noch nicht geöffneten Türflügel im Weg stehen würden. Die EP 2 103 469 A1 aus dem Stand der Technik beschreibt eine gummielastisches Türdichtungsprofil zur Verwendung bei Fahrzeugtürsystemen, die mindestens eine Fahrzeugtür und mindestens eine ausfahrbare Zustiegshilfe aufweisen, wobei sich die Fahrzeugtür bei Öffnungs- und Schließvorgängen im Wesentlichen in horizontaler Richtung bewegt und sich die Zustiegshilfe auch in vertikaler Richtung auf eine der Zustiegshilfe zugewandte Unterkante der Fahrzeugtür zu und von dieser weg bewegt und das Türdichtungsprofil an der Unterkante der Fahrzeugtür angeordnet ist. Das Türdichtungsprofil ist im geschlossenen Zustand der Fahrzeugtür im Wesentlichen zwischen der Unterkante der Fahrzeugtür und der Zustiegshilfe angeordnet, wobei ein erster Dichtungsbereich des Türdichtungsprofils bei geschlossener Fahrzeugtür und eingefahrener Zustiegshilfe gegen einer der Unterkante der Fahrzeugtür zugewandte erste Dichtungsfläche der Zustiegshilfe abdichtet und der erste Dichtungsbereich derart ausgeführt ist und derart in Richtung der Zustiegshilfe vorsteht, dass eine Dichtwirkung erreicht wird, wenn die Fahrzeugtür bei eingefahrener Zustiegshilfe in horizontaler Richtung geschlossen wird und/oder die Zustiegshilfe bei geschlossener Fahrzeugtür in vertikaler in Richtung des Türdichtungsprofils bewegt wird.

Aufgabe der Erfindung ist es daher, ein Zustiegssystem für ein Fahrzeug mit einer Zustiegshilfe bereitzustellen, welches Zustiegssystem sowohl für ein Abdichten des Innenraums des Fahrzeugs als auch zum Bereitstellen eines barrierefreien Zugangs durch die Zustiegshilfe eingerichtet ist und bei welchem die Zustiegshilfe auch vor einer Türöffnung ausgefahren werden kann.

Diese Aufgabe wird für ein Zustiegssystem mit den Merkmalen des Oberbegriffs von Anspruch 1 durch die Merkmale des kennzeichnenden Teils von Anspruch 1 gelöst.

Wesentlich für die Erfindung ist die Erkenntnis, dass eine schwenkbare Kippleiste vorgesehen sein kann, welche einen Höhenunterschied zwischen der Zustiegshilfe und dem Fahrzeugboden überbrücken kann. Auf diese Weise kann die Zustiegshilfe versetzt zu dem Fahrzeugboden und damit unterhalb einer Unterkante eines Türflügels angeordnet werden, was das Abdichten erleichtert, wobei dann durch die schwenkbare Kippleiste dennoch eine barrierefreie Überbrückung zwischen der Trittfläche der Zustiegshilfe und dem Fahrzeugboden erreicht werden kann.

Die Erfindung betrifft ein Zustiegssystem für ein Fahrzeug, welches Zustiegssystem einen Fahrzeugboden für einen Innenraum des Fahrzeugs aufweist. Bei dem Fahrzeug kann es sich insbesondere um ein Fahrzeug des öffentlichen Personenverkehrs und weiter um einen Personenbeförderungsbus oder um ein Schienenfahrzeug handeln. Der Fahrzeugboden kann sich in einem Innenraum des Fahrzeugs befinden, bei welchem Innenraum es sich insbesondere um einen Fahrgastraum handeln kann. Der Fahrzeugboden kann dazu eingerichtet sein, Teil eines Fahrzeugbodens im weiteren Sinne in dem Innenraum zu bilden. Insoweit kann der Fahrzeugboden im vorliegenden Sinne lediglich Bestandteil eines größeren Fahrzeugbodens des Fahrzeugs insgesamt sein. Das erfindungsgemäße Zustiegssystem weist eine Zustiegshilfe auf, welche wiederum eine Trittfläche zum Betreten durch Fahrgäste des Fahrzeugs beim Ein- oder Ausstieg aufweist. Bei dieser Zustiegshilfe kann es sich um eine plattformartige Struktur handeln, deren Trittfläche eine insbesondere obere Oberfläche der plattformartigen Struktur ist. Richtungsangaben wie oben und unten beziehen sich hier und nachfolgend auf eine Lage des Fahrzeugs im bestimmungsgemäßen Betrieb.

Das erfindungsgemäße Zustiegssystem weist eine schwenkbar gelagerte Kippleiste zur Überbrückung eines Höhenunterschieds zwischen der Trittfläche und dem Fahrzeugboden auf. Mit anderen Worten ist die Kippleiste dazu eingerichtet, die Trittfläche der Zustiegshilfe und den Fahrzeugboden so zu verbinden, dass im Wesentlichen keine oder nur geringfügige Stufen oder Lücken zwischen der Trittfläche und dem Fahrzeugboden vorliegen. Speziell überbrückt die Trittleiste den Höhenunterschied zwischen der Trittfläche der Zustiegshilfe und einer Fahrzeugbodenfläche des Fahrzeugbodens, welche Fahrzeugbodenfläche der Stehfläche - und damit einer nach oben weisenden Oberfläche - des Fahrzeugbodens entspricht.

Eine bevorzugte Ausführungsform ist dadurch gekennzeichnet, dass das Zustiegssystem einen Antrieb zum Ein- und Ausfahren der Zustiegshilfe aufweist und dass die Kippleiste bei zumindest teilweise - vorzugsweise bei vollständig - ausgefahrener Zustiegshilfe den Höhenunterschied überbrückt. Mit anderen Worten kann es also sein, dass die Kippleiste nur bei ganz oder teilweise ausgefahrener Zustiegshilfe - und damit nicht bei insbesondere vollständig eingefahrener Zustiegshilfe - so angeordnet ist, dass der Höhenunterschied überbrückt wird. Es kann also einen Grenzpunkt bei der Ausfahrbewegung der Zustiegshilfe geben, ab welchem die Kippleiste zur Überbrückung des Höhenunterschieds angeordnet ist. Weiter insbesondere kann die Zustiegshilfe in einem Rahmen des Fahrzeugs aufgenommen sein, sodass sie beim Ein- bzw. Ausfahren linear zu diesem Rahmen und vorzugsweise im Wesentlichen horizontal verschoben wird.

Eine weitere bevorzugte Ausführungsform ist dadurch gekennzeichnet, dass die Kippleiste eine ebene Übergangsrampe zur Überbrückung des Höhenunterschieds bildet. Insbesondere kann dies bei zumindest teilweise ausgefahrener Zustiegshilfe der Fall sein.

Gemäß einer bevorzugten Ausführungsform ist vorgesehen, dass die Kippleiste um eine Kippachse schwenkbar gelagert ist, welche Kippachse im Wesentlichen parallel zu der Trittfläche verläuft. Mit anderen Worten liegt diese Kippachse, ggf. mit einem Versatz senkrecht zu der Trittfläche, in der durch die Trittfläche definierten Ebene. Es kann weiter sein, dass das Zustiegssystem einen Schwenkantrieb zum insbesondere beidseitigen Schwenken der Kippleiste um die Kippachse aufweist. Bevorzugt ist, dass ein Motor des Antriebs zum Ein- und Ausfahren der Zustiegshilfe von dem Schwenkantrieb umfasst ist. Mit anderen Worten dient der Motor des Antriebs für die Zustiegshilfe auch dem Schwenken der Kippleiste. Dabei kann dieser Motor auch nur für eine der beiden Schwenkrichtungen das Schwenken der Kippleiste antreiben.

Eine bevorzugte Ausführungsform ist dadurch gekennzeichnet, dass beim Ausfahren der Zustiegshilfe zumindest ein Teil der Kippleiste aus einer im Wesentlichen horizontalen Position in eine geneigte Position verschwenkt wird. Der Begriff horizontal und geneigt bezieht sich hier und im gesamten Kontext der vorliegenden Erfindung auf eine Lage des Fahrzeugs im bestimmungsgemäßen Betrieb. Bei der geneigten Position ist es bevorzugt, dass ein von der Kippachse fernes Ende der Kippleiste unterhalb der Kippachse angeordnet ist. Dabei ist das von der Kippachse ferne Ende der Kippleiste dasjenige der beiden, auf die Kippachse bezogenen Enden der Kippleiste, welches von der Kippachse weiter entfernt ist. Insbesondere kann es sein, dass beim Einfahren der Zustiegshilfe zumindest der obige Teil der Kippleiste - also derjenige Teil der verschwenkt wird, bei welchem es sich um die Kippleiste insgesamt handeln kann - in die im Wesentlichen horizontale Position verschwenkt wird.

Hier sieht eine bevorzugte Ausführungsform vor, dass die Zustiegshilfe eine Kopplungseinrichtung zur Betätigung der Kippleiste beim Ein- und Ausfahren der Zustiegshilfe aufweist. Speziell kann diese Kopplungseinrichtung mindestens einen mit der Kippleiste verbundenen Führungskörper - insbesondere eine Führungsrolle - und mindestens eine starr mit der Zustiegshilfe verbundene Führungsschiene zur Aufnahme des Führungskörpers aufweisen. Weiter ist dann vorgesehen, dass durch den Verlauf der Führungsschiene zumindest der Teil der Kippleiste beim Ein- und Ausfahren der Zustiegshilfe zwischen der im Wesentlichen horizontalen Position und der geneigten Position verschwenkt wird.

Eine weitere bevorzugte Ausführungsform ist dadurch gekennzeichnet, dass das Zustiegssystem einen Türflügel zum wahlweisen Freigeben und Abdecken einer Türöffnung des Fahrzeugs in einer jeweiligen Öffnungsposition oder Schließposition des Türflügels aufweist, wobei die Zustiegshilfe unterhalb des Türflügels angeordnet ist. Der Türflügel kann also zwischen einer Schließposition, in welcher der Türflügel die Türöffnung abdeckt, und einer Öffnungsposition, in welcher der Türflügel die Türöffnung freigibt, verstellt werden. Bevorzugt ist weiter, dass die Zustiegshilfe auch in der Schließposition des Türflügels ausgefahren werden kann. Das Zustiegssystem weist eine Türabdichtanordnung zum Abdichten eines Türflügelspalts zwischen der Kippleiste und dem Türflügel bei eingefahrener Zustiegshilfe auf. Die Anordnung der Zustiegshilfe unterhalb des Türflügels bedeutet lediglich, dass die vertikale Höhe der Zustiegshilfe geringer als die vertikale Höhe eines unteren Endes des Türflügels ist. Nicht erforderlich ist es, dass die Zustiegshilfe direkt vertikal unterhalb des Türflügels angeordnet ist.

Gemäß einer bevorzugten Ausführungsform ist vorgesehen, dass die Türabdichtanordnung ein an dem Türflügel angeordnetes Abdichtgummi aufweist, welches bei eingefahrener Zustiegshilfe und Türflügel in Schließposition die Kippleiste abdichtend berührt. Dabei ist bevorzugt, dass das Abdichtgummi abdichtend in Eingriff mit der Kippleiste steht. Das bedeutet, dass die abdichtende Berührung bzw. der Eingriff im Wesentlichen entlang einer gesamten Querausdehnung der Kippleiste erfolgt. Diese Querausdehnung erstreckt sich in der Ebene der Trittfläche und ist senkrecht zu der Ein- und Ausfahrrichtung der Zustiegshilfe ausgerichtet. Insbesondere kann es sein, dass bei eingefahrener Zustiegshilfe und Türflügel in Schließposition die Kippleiste bezogen auf den Innenraum innenseitig - also in Richtung des Innern des Fahrzeugs - zu dem Türflügel angeordnet ist.

Das erfindungsgemäße Zustiegssystem ist dadurch gekennzeichnet, dass die Kippleiste einen ersten Leistenteil und einen mit dem ersten Leistenteil schwenkbar gekoppelten zweiten Leistenteil aufweist. Die entsprechende Schwenkachse kann auch als Leistenschwenkachse bezeichnet werden. Mit anderen Worten ist die Kippleiste dann mehrteilig ausgestaltet. Bevorzugt ist dabei, dass die Leistenschwenkachse des ersten Leistenteils zu dem zweiten Leistenteil - also diejenige Achse, um welche das erste Leistenteil und das zweite Leistenteil zueinander schwenkbar sind - im Wesentlichen parallel zu der Kippachse verläuft. Insbesondere kann es sein, dass bei eingefahrener Zustiegshilfe und Türflügel in Schließposition das Abdichtgummi das erste Leistenteil abdichtend berührt, und zwar vorzugsweise abdichtend mit dem ersten Leistenteil in Eingriff steht. Diese Variante erlaubt ein Verschwenken des ersten Leistenteils zum Abdichten, wodurch die leistenteilseitige Abdichtfläche für den Eingriff mit dem Abdichtgummi vergrößert wird.

Eine weitere bevorzugte Ausführungsform ist dadurch gekennzeichnet, dass das Abdichtgummi eine Ballondichtung ist und dass bei eingefahrener Zustiegshilfe und Türflügel in Schließposition die Ballondichtung eine Vorderkante der Kippleiste abdichtend berührt, vorzugsweise abdichtend mit der Vorderkante der Kippleiste in Eingriff steht.

Noch eine weitere bevorzugte Ausführungsform ist dadurch gekennzeichnet, dass die Kippleiste an dem Fahrzeugboden schwenkbar gelagert ist. Insbesondere kann die Kippleiste um die Kippachse schwenkbar gelagert sein. Ebenso ist es bevorzugt, dass das Zustiegssystem eine Scharniervorrichtung zur schwenkbaren Lagerung der Kippleiste an dem Fahrzeugboden aufweist. Dabei kann dieser Scharniervorrichtung eine Doppelfunktion zukommen, und zwar dadurch, dass die Scharniervorrichtung zum Abdichten eines Bodenspalts zwischen der Kippleiste und dem Fahrzeugboden eingerichtet ist, was untenstehend noch genauer beschrieben wird. Bevorzugt ist der zweite Leistenteil durch die Scharniervorrichtung mit dem Fahrzeugboden gekoppelt.

Gemäß einer bevorzugten Ausführungsform ist vorgesehen, dass die Kippleiste von einer Leistenfläche der Kippleiste aufragende Seitenstege aufweist, welche zum Abdecken eines im Wesentlichen quer zur Kippachse verlaufenden jeweiligen Spaltes zwischen der Kippleiste und dem Fahrzeugboden bei zumindest teilweise ausgefahrener Zustiegshilfe eingerichtet sind. Auf diese Weise kann wirksam verhindert werden, dass ein Einklemmen beim Verschwenken der Kippleiste erfolgt.

Eine bevorzugte Ausführungsform ist dadurch gekennzeichnet, dass die Kippleiste bei eingefahrener Zustiegshilfe mit dem Fahrzeugboden eine, vorzugsweise ebene, im Wesentlichen geschlossene Bodenebene bildet. Insbesondere kann es sein, dass das Zustiegssystem eine Bodenabdichtanordnung zum im Wesentlichen luftdichten Abdichten der Bodenebene aufweist. Da ist es weiter bevorzugt, dass die Bodenabdichtanordnung mit der Türabdichtanordnung den Innenraum des Fahrzeugs im Wesentlichen luftdicht abdichtet.

Eine bevorzugte Ausgestaltung sieht hier vor, dass die Bodenabdichtanordnung eine elastische Gummianordnung aufweist, welche sich entlang einer Randstrecke der Kippleiste erstreckt. Bevorzugt ist weiter, dass die Gummianordnung eine im Wesentlichen entlang der Kippachse ausgerichteten Querabschnitt aufweist. Die Ausrichtung dieses Querabschnitts ist dementsprechend quer in Bezug zur Aus- und Einfahrrichtung der Zustiegshilfe. Bevorzugt ist weiter, dass der Querabschnitt unterhalb der Bodenebene angeordnet ist.

Eine weitere bevorzugte Ausgestaltung sieht vor, dass der Querabschnitt im Wesentlichen entlang der Kippachse verläuft. Vorzugsweise ist der Querabschnitt zum Abdichten der Bodenebene fest mit dem Fahrzeugboden und fest mit der Kippleiste verbunden. Insbesondere kann es sein, dass der Querabschnitt von der Scharniervorrichtung umfasst ist oder die Scharniervorrichtung bildet.

Eine weitere bevorzugte Ausführungsform ist dadurch gekennzeichnet, dass die Gummianordnung Längsabschnitte aufweist, welche im Wesentlichen quer zur Kippachse ausgerichtet sind und welche dazu eingerichtet sind, die Bodenebene bei eingefahrener Zustiegshilfe - insbesondere durch Eingriff mit der Kippleiste - im Wesentlichen luftdicht abzudichten. Weiter ist es bevorzugt, dass die Längsabschnitte an dem Fahrzeugboden angeordnet sind und bei eingefahrener Zustiegshilfe mit der Kippleiste abdichtend in Eingriff kommen.

Eine weitere bevorzugte Ausführungsform ist dadurch gekennzeichnet, dass die elastische Gummianordnung und insbesondere der Querabschnitt sich zum Schwenken der Kippleiste elastisch verformt. Durch diese elastische Verformung wird also die Lageänderung der Kippleiste relativ zum Fahrzeugboden ermöglicht. Dabei ist es weiter bevorzugt, dass die elastische Gummianordnung fest und insbesondere formschlüssig mit dem Fahrzeugboden verbunden ist.
Bezogen auf den erste Leistenteil und den zweite Leistenteil kann es weiter sein, dass der zweite Leistenteil durch die Scharniervorrichtung mit dem Fahrzeugboden gekoppelt ist. Der erste Leistenteil ist dann regelmäßig nicht unmittelbar mit dem Fahrzeugboden gekoppelt.

Eine weitere bevorzugte Ausführungsform ist dadurch gekennzeichnet, dass das erste Leistenteil frei schwenkbar mit dem zweiten Leistenteil gekoppelt ist. Mit anderen Worten wird eine solche Schwenkbewegung nicht durch eine Hemmung oder eine sonstige Fixierung blockiert. Es kann sein, dass eine solche freie Schwenkbarkeit nur bezüglich einer Richtung - der beiden prinzipiell möglichen Richtungen - der Schwenkbewegung besteht. Ebenso kann die freie Schwenkbarkeit auf einen bestimmten Bereich relativer Lagen - entsprechend also Schwenklagen - des ersten Leistenteils und des zweiten Leistenteils beschränkt sein. Vorzugsweise kann es, dass bei eingefahrener Zustiegshilfe der erste Leistenteil winklig zu dem zweiten Leistenteil ausgerichtet ist. Eine solche winklige Ausrichtung bedeutet, dass der Winkel zwischen dem ersten Leistenteil und dem zweiten Leistenteil wesentlich von 0° bzw. von 180° abweicht, sodass also das erste Leistenteil im Wesentlichen nicht koplanar zu dem zweiten Leistenteil ausgerichtet ist. Insbesondere kann es sein, dass bei eingefahrener Zustiegshilfe das Abdichtgummi das erste Leistenteil abdichtend berührt und vorzugsweise abdichtend mit dem ersten Leistenteil in Eingriff steht. Schließlich kann es sein, dass bei eingefahrener Zustiegshilfe das erste Leistenteil die Zustiegshilfe insbesondere in horizontaler Richtung abdeckt. Dieses Abdecken kann sich insbesondere auf eine Außensicht - also von außerhalb des Fahrzeugs - auf die Zustiegshilfe beziehen.

Gemäß einer bevorzugten Ausführungsform ist vorgesehen, dass die Zustiegshilfe durch ein Verschieben in Eingriff mit der Kippleiste kommt, sodass die Kippleiste so verschwenkt wird, dass die Kippleiste auf der Trittfläche aufliegt. Folglich bewirkt der Eingriff der Zustiegshilfe mit der Kippleiste zumindest teilweise eine Schwenkbewegung der Kippleiste. Damit kann die Lage der Kippleiste zu der Zustiegshilfe großzügiger toleriert werden. Ein solches Verschieben der Zustiegshilfe entspricht einer linearen und vorzugsweise horizontalen Verstellung der Zustiegshilfe, insbesondere relativ zu dem obigen Rahmen. Dieses Verschieben kann beim Ausfahren aus dem eingefahrenen Zustand der Zustiegshilfe gegeben sein. Bei dem Eingriff mit der Kippleiste kann es sich speziell um einen Eingriff mit dem ersten Leistenteil handeln. Vorzugsweise liegt speziell das erste Leistenteil auf der Trittfläche auf.

Eine bevorzugte Ausführungsform ist dadurch gekennzeichnet, dass die Zustiegshilfe durch das Verschieben, und zwar insbesondere beim Ausfahren aus dem eingefahrenen Zustand, das erste Leistenteil so verschwenkt, dass das erste Leistenteil unter dem Türflügel herausragt. Ein solches Herausragen ist in der Richtung von dem Innern des Fahrzeugs zu einem Äußeren des Fahrzeugs zu verstehen. Dies erlaubt das Vorsehen einer möglichst großen Ausdehnung der Kippleiste, also über die Position der Türflügel aus dem Innern des Fahrzeugs hinaus, was wiederum erlaubt, die Steigung der Kippleiste bei der Überbrückung zu begrenzen. Eine geringere Steigung bedeutet auch eine Verbesserung der Barrierefreiheit. Ebenso ist es bevorzugt, dass die Zustiegshilfe durch das Verschieben das erste Leistenteil so verschwenkt, dass das erste Leistenteil außer Eingriff mit dem Abdichtgummi gerät. In dem Augenblick des Verschiebens der Zustiegshilfe ist das durch das Abdichtgummi bewirkte Abdichten nicht mehr erforderlich, sodass das erste Leistenteil von dem Abdichtgummi gelöst werden kann.

Eine weitere bevorzugte Ausführungsform ist dadurch gekennzeichnet, dass bei ausgefahrener Zustiegshilfe die Zustiegshilfe so mit dem ersten Leistenteil in Eingriff kommt, dass das erste Leistenteil mit dem zweiten Leistenteil koplanar ausgerichtet ist. Mit anderen Worten justiert die Zustiegshilfe das erste Leistenteil gegenüber dem zweiten Leistenteil. Vorzugsweise kommt die Zustiegshilfe mit dem ersten Leistenteil so in Eingriff, dass das erste Leistenteil mit dem zweiten Leistenteil die Übergangsrampe bildet.

Weitere vorteilhafte und bevorzugte Ausgestaltungen, Merkmale und Eigenschaften ergeben sich aus der nachfolgenden speziellen Beschreibung mit Bezug auf die Figuren. In der lediglich ein Ausführungsbeispiel wiedergebenden Zeichnung zeigt
- Fig. 1: eine Perspektivansicht eines Teils eines Zustiegssystems mit ausgefahrener Zustiegshilfe,
- Fig. 2: eine schematische Perspektivansicht eines Teils des Zustiegssystems der Fig. 1 mit eingefahrener Zustiegshilfe
- Fig. 3: eine Perspektivansicht auf einen Teil des Zustiegssystems der Fig. 1,
- Fig. 4: eine seitliche Schnittansicht im Längsschnitt auf einen Teil des Zustiegssystems der Fig. 1 und
- Fig. 5a-e): eine seitliche Schnittansicht im Längsschnitt auf einen Teil eines vorschlagsgemäßen Zustiegssystems gemäß einem Ausführungsbeispiel bei einem Ausfahrvorgang der Zustiegshilfe.

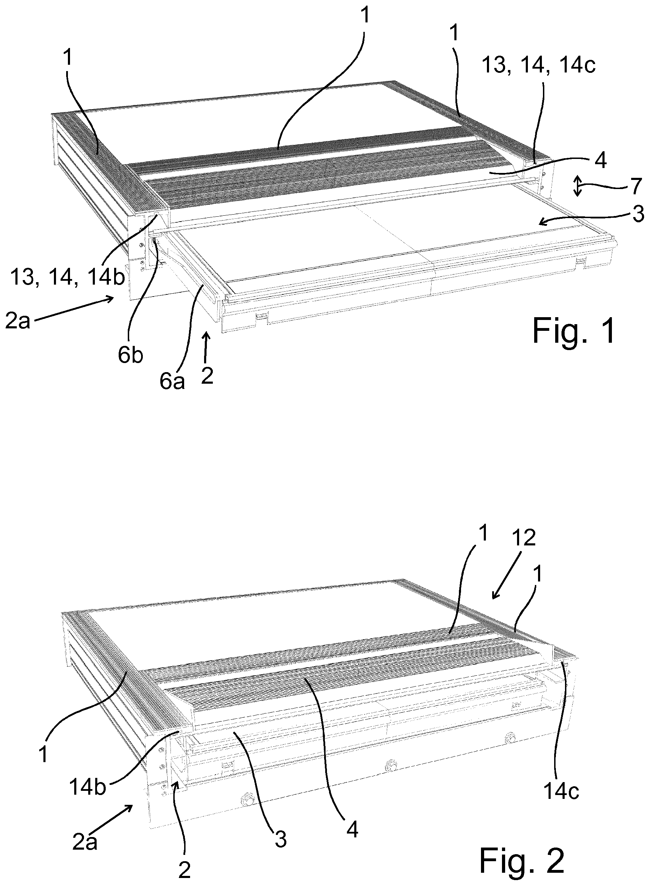

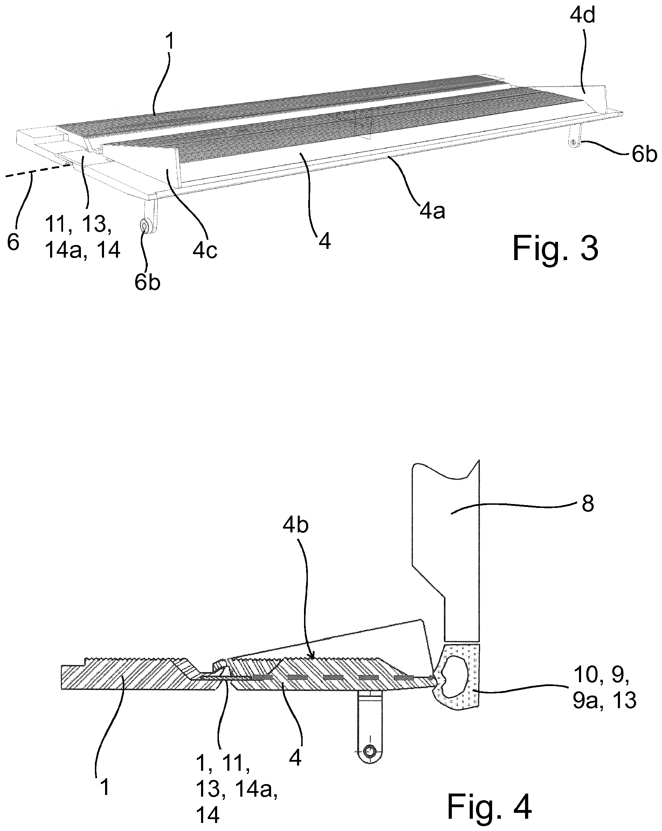

Die in der Zeichnung dargestellten Zustiegssysteme sind für ein - hier nicht weiter dargestelltes - Schienenfahrzeug des öffentlichen Personenverkehrs bestimmt. Zunächst wird das Zustiegssystem beschrieben, welches in den Fig. 1 bis 4 beschrieben ist. Im Innern des Fahrzeugs ist ein in der Fig. 1 dargestellter Fahrzeugboden 1 des Zustiegssystems, welcher Bestandteil eines - hier nicht dargestellten - größeren Fahrzeugbodens des Fahrzeugs insgesamt ist. Das Zustiegssystem weist eine Zustiegshilfe 2 mit einer Trittfläche 3 auf, welche durch die Fahrgäste beim Ein- oder Ausstieg betreten werden kann. Ebenso weist das Zustiegssystem eine Kippleiste 4 auf, welche Kippleiste 4 insgesamt um die in der Fig. 3 angedeutete Kippachse 6 schwenkbar gelagert ist.

In dem in der Fig. 1 gezeigten Zustand überbrückt die Kippleiste 4 den Höhenunterschied 7 zwischen der Trittfläche 3 und dem Fahrzeugboden 1. Dies geschieht dadurch, dass die Kippleiste 4 durch Verschwenkung aus einer horizontalen Lage eine ebene Übergangsrampe - wie in der Fig. 1 dargestellt - zu diesem Zweck bildet. Hingegen ist die Zustiegshilfe 2 in dem in der Fig. 2 gezeigten Zustand eingefahren und folglich die Trittfläche 3 nicht in Gebrauch. Die Kippleiste 4 ist dann horizontal zu dem Fahrzeugboden 1 ausgerichtet.

Das Zustiegssystem weist einen hier nicht gezeigten Motor und einen entsprechenden, hier ebenfalls nicht gezeigten Linearantrieb zum Ein- und Ausfahren der Zustiegshilfe 2 aus dem Rahmen 2a auf. Ebenso weist das Zustiegssystem eine Kopplungseinrichtung zum Schwenken der Kippleiste 4 um die Kippachse 6 auf. Diese Kopplungseinrichtung umfasst den obigen Motor sowie mit der Zustiegshilfe 2 starr gekoppelte Führungsschienen 6a, in welche mit der Kippleiste 4 verbundene Führungsrollen 6b eingreifen. Auf diese Weise wird die Ein- und Ausfahrbewegung der Zustiegshilfe 2 in eine Schwenkbewegung der Kippleiste 4 überführt.

Das Zustiegssystem der Fig. 1 bis 4 weist einen in der Fig. 4 dargestellten Türflügel 8 auf, welcher durch Einnehmen einer Öffnungsposition bzw. einer Schließposition eine Türöffnung wahlweise Freigeben und Abdecken kann. Eine Türabdichtanordnung 10 des Zustiegssystems ist zum Abdichten eines Türflügelspalts zwischen der Kippleiste 4 und dem Türflügel 8 vorgesehen. Dabei ist die Zustiegshilfe 2 unterhalb des Türflügels 8 angeordnet, weist also einen Vertikalversatz auf. Die Türabdichtanordnung 10 weist ein als Ballondichtung 9a ausgeführtes und an dem Türflügel 8 angeordnetes Abdichtgummi 9 auf. Damit wird ein abdichtender Eingriff mit der Vorderkante 4a der Kippleiste 4 erreicht.

Das Zustiegssystem weist ferner eine in den Fig. 3 und 4 erkennbare Scharniervorrichtung 11 zur schwenkbaren Lagerung der Kippleiste 4 an dem Fahrzeugboden 1 auf. Diese Scharniervorrichtung 11 ist gleichzeitig Bestandteil einer Bodenabdichtanordnung 13 zum luftdichten Abdichten einer in der Fig. 2 dargestellten geschlossenen Bodenebene 12, welche Bodenabdichtanordnung 13 auch die obige Türabdichtanordnung 10 umfasst. Speziell wird die Scharniervorrichtung 11 durch den in der Fig. 3 erkennbare Querabschnitt 14a einer elastischen Gummianordnung 14 gebildet. Diese elastische Gummianordnung 14 erstreckt sich entlang einer Randstrecke der Kippleiste 4 und weist neben dem Querabschnitt 14a auch Längsabschnitte 14b, c auf, welche Längsabschnitte 14b, c bei horizontaler Kippleiste 4 mit dieser abdichtend in Eingriff kommen. Beim Verschwenken der Kippleiste 4 verformt sich der Querabschnitt 14a. Weiter weist die Kippleiste 4 eine Leistenfläche 4b sowie von dieser aufragende Seitenstege 4c, d auf, welche - wie in der Fig. 1 zu erkennen - den quer zur Kippachse 6 verlaufenden Spalt zwischen der Kippleiste 4 und dem entsprechenden Abschnitt des Fahrzeugbodens 1 abdecken.

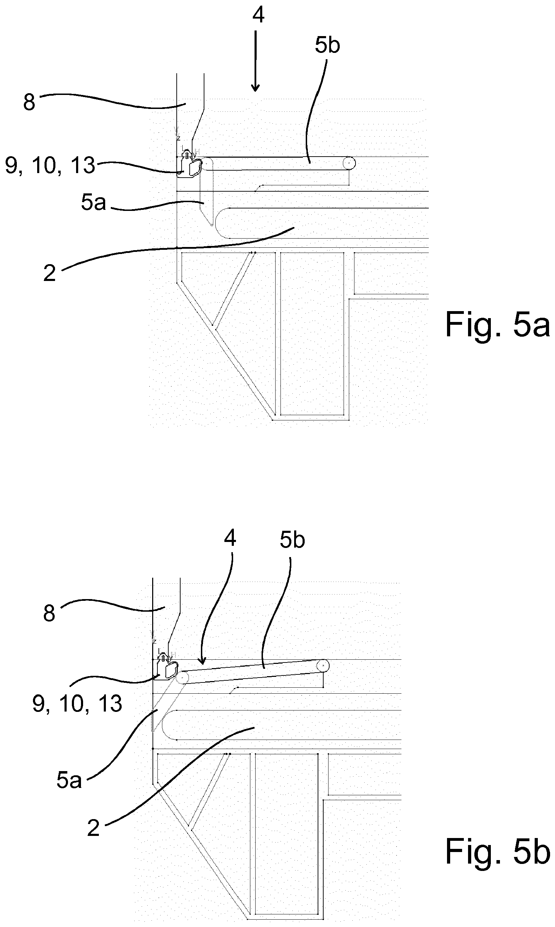

Die Ausfahrbewegung der vorschlagsgemäßen Zustiegshilfe 2 wird anhand der Fig. 5a bis 5e dargestellt, welche ein Ausführungsbeispiel des vorschlagsgemäßen Zustiegssystems zeigen. Dabei ist dieses Ausführungsbeispiel bis auf die nachstehend beschriebenen Unterschiede sinngemäß gleich zum Zustiegssystem gemäß den Fig. 1 bis 4. Die Kippleiste 4 weist hier einen ersten Leistenteil 5a und einen zweiten Leistenteil 5b auf. Die in den Fig. 5a bis 5e dargestellte Ausfahrbewegung der Zustiegshilfe 2 erfolgt wiederum durch einen hier nicht dargestellten Antrieb, welche die Zustiegshilfe 2 aus einem in den Fig. 1 und 2 dargestellten Rahmen 2a des Fahrzeugs ausfährt. Der Motor dieses Antriebs bewirkt auch ein Verschwenken der Kippleiste 4 um die Kippachse 6 aus einer horizontalen Position in eine geneigte Position entsprechend der Darstellung in den Fig. 5a bis 5e, wobei diese Schwenkbewegung an dem zweiten Leistenteil 5b angreift. Beim Einfahren der Zustiegshilfe 2 - was im Wesentlichen einer Umkehr der Ausfahrbewegung entspricht - wird auch die Kippleiste 4 in entsprechend umgekehrter Schwenkrichtung verschwenkt.

In den Fig. 5a bis 5e ist der untere Teil eines Türflügels 8 erkennbar. Eine als Abdichtgummi 9 - hier nicht als Ballondichtung - ausgebildete Türabdichtanordnung 10 ist an dem Türflügel 8 befestigt. Bei eingefahrener Zustiegshilfe 2, also insbesondere in dem in der Fig. 5a dargestellten Zustand, steht das Abdichtgummi 9 mit der Kippleiste 4 und speziell mit dem ersten Leistenteil 5a der Kippleiste 4 abdichtend in Eingriff. Somit ist das Innere des Fahrzeugs und insbesondere der Fahrgastraum oberhalb des Fahrzeugbodens 1 gegenüber der Umgebung des Fahrzeugs zumindest so weit abgedichtet, dass ein ausreichender Komfort der Fahrgäste gewährleistet ist.

Die durch die Scharniervorrichtung 11 hergestellte Kopplung zwischen dem Fahrzeugboden 1 und der Kippleiste 4 besteht speziell zwischen dem Fahrzeugboden 1 und dem zweiten Leistenteil 5b. Das erste Leistenteil 5a lässt sich um eine zu der Kippachse 6 parallele Leistenschwenkachse gegenüber dem zweiten Leistenteil 5b frei verschwenken. Die hier nicht im Detail wiedergegebene entsprechende Lagerung wirkt dabei ebenfalls abdichtend.

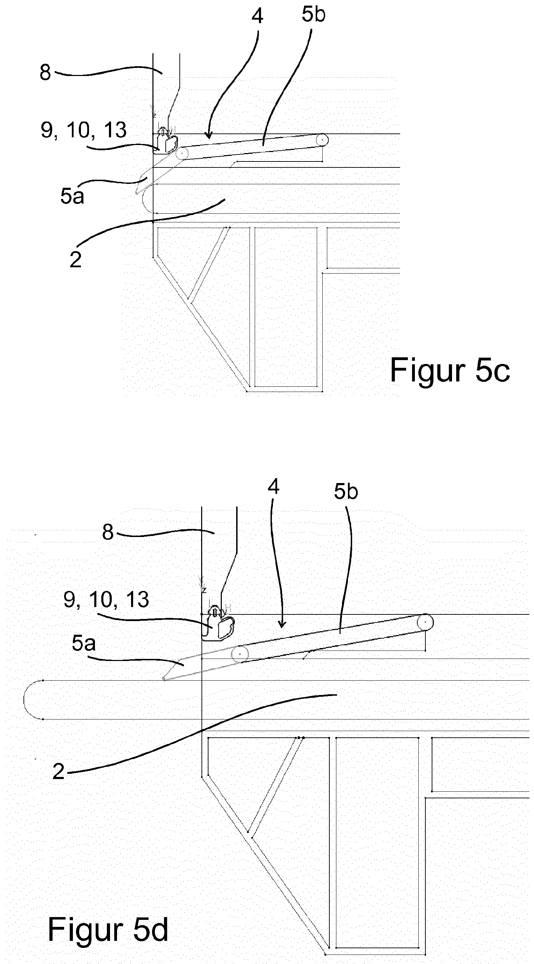

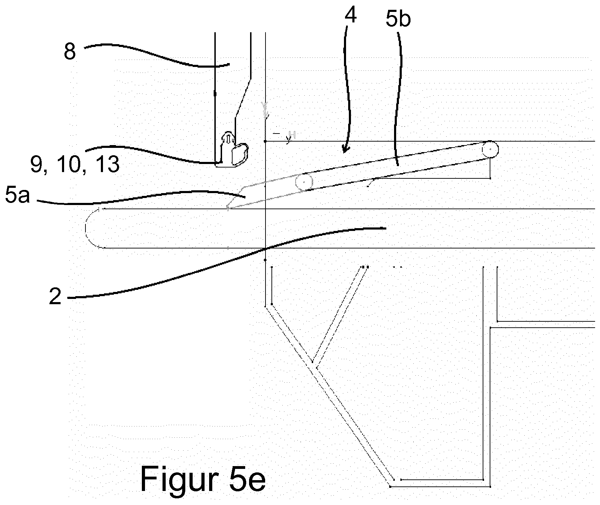

Im eingefahrenen Zustand der Zustiegshilfe 2 gemäß der Fig. 5a ist das zweite Leistenteil 5b horizontal ausgerichtet, wohingegen das erste Leistenteil 5a durch Einwirkung der Schwerkraft im Wesentlichen vertikal ausgerichtet ist. Beim Ausfahren der Zustiegshilfe 2 kommt diese in Eingriff mit dem ersten Leistenteil 5a der Kippleiste 4, wie in der Fig. 5b dargestellt ist. Durch die weitere Bewegung - Fig. 5c und 5d - verschwenkt die Zustiegshilfe 2 das erste Leistenteil 5a, sodass dieses auf der Trittfläche 3 aufliegt und es außer Eingriff mit dem Abdichtgummi 9 gerät. Da gleichzeitig das zweite Leistenteil 5b um die Kippachse 6 entgegen dem Uhrzeigersinn gemäß den Fig. 5a bis 5e verschwenkt wird, werden somit das erste Leistenteil 5a und das zweite Leistenteil 5b zueinander koplanar ausgerichtet und bilden eine Übergangsrampe mit einer durchgehenden Ebene. Dies ist in der Fig. 5e zu erkennen, in welcher auch eine Öffnungsbewegung des Türflügels 8 zu erkennen ist.

## Patentansprüche

1. Zustiegssystem für ein Fahrzeug, welches Zustiegssystem einen Fahrzeugboden (1) für einen Innenraum des Fahrzeugs und eine Zustiegshilfe (2) aufweist, welche Zustiegshilfe (2) eine Trittfläche (3) zum Betreten durch Fahrgäste des Fahrzeugs beim Ein- oder Ausstieg aufweist, wobei das Zustiegssystem eine schwenkbar gelagerte Kippleiste (4) zur Überbrückung eines Höhenunterschieds (7) zwischen der Trittfläche (3) und dem Fahrzeugboden (1) aufweist, **dadurch gekennzeichnet, dass** die Kippleiste (4) einen ersten Leistenteil (5a) und einen mit dem ersten Leistenteil (5a) schwenkbar gekoppelten zweiten Leistenteil (5b) aufweist.

2. Zustiegssystem nach Anspruch 1, **dadurch gekennzeichnet, dass** das Zustiegssystem einen Antrieb zum Ein- und Ausfahren der Zustiegshilfe (2) aufweist und dass die Kippleiste (4) bei zumindest teilweise ausgefahrener Zustiegshilfe (2) den Höhenunterschied (7) überbrückt.

3. Zustiegssystem nach Anspruch 1 oder 2, **dadurch gekennzeichnet, dass** die Kippleiste (4), insbesondere bei zumindest teilweise ausgefahrener Zustiegshilfe (2), eine ebene Übergangsrampe zur Überbrückung des Höhenunterschieds (7) bildet.

4. Zustiegssystem nach einem der Ansprüche 1 bis 3, **dadurch gekennzeichnet, dass** die Kippleiste (4) um eine Kippachse (6) schwenkbar gelagert ist, welche Kippachse (6) im Wesentlichen parallel zu der Trittfläche (3) verläuft, vorzugsweise, dass das Zustiegssystem einen Schwenkantrieb zum insbesondere beidseitigen Schwenken der Kippleiste (4) um die Kippachse (6) aufweist, insbesondere, dass ein Motor des Antriebs zum Ein- und Ausfahren der Zustiegshilfe (2) von dem Schwenkantrieb umfasst ist.

5. Zustiegssystem nach Anspruch 4, **dadurch gekennzeichnet, dass** beim Ausfahren der Zustiegshilfe (2) zumindest ein Teil der Kippleiste (4) aus einer im Wesentlichen horizontalen Position in eine geneigte Position verschwenkt wird, vorzugsweise, wobei bei der geneigten Position ein von der Kippachse (6) fernes Ende der Kippleiste (4) unterhalb der Kippachse (6) angeordnet ist, insbesondere, dass beim Einfahren der Zustiegshilfe (2) zumindest der Teil der Kippleiste (4) in die im Wesentlichen horizontale Position verschwenkt wird.

6. Zustiegssystem nach einem der Ansprüche 1 bis 5, **dadurch gekennzeichnet, dass** das Zustiegssystem einen Türflügel (8) zum wahlweisen Freigeben und Abdecken einer Türöffnung des Fahrzeugs in einer jeweiligen Öffnungsposition oder Schließposition des Türflügels (8) aufweist, wobei die Zustiegshilfe (2) unterhalb des Türflügels (8) angeordnet ist, wobei das Zustiegssystem eine Türabdichtanordnung (10) zum Abdichten eines Türflügelspalts zwischen der Kippleiste (4) und dem Türflügel (8) bei eingefahrener Zustiegshilfe (2) aufweist.

7. Zustiegssystem nach Anspruch 6, **dadurch gekennzeichnet, dass** die Türabdichtanordnung (10) ein an dem Türflügel (8) angeordnetes Abdichtgummi (9) aufweist, welches bei eingefahrener Zustiegshilfe (2) und Türflügel (8) in Schließposition die Kippleiste (4) abdichtend berührt, vorzugsweise abdichtend in Eingriff mit der Kippleiste (4) steht, insbesondere, dass bei eingefahrener Zustiegshilfe (2) und Türflügel (8) in Schließposition die Kippleiste (4) bezogen auf den Innenraum innenseitig zu dem Türflügel (8) angeordnet ist.

8. Zustiegssystem nach Anspruch 7, **dadurch gekennzeichnet, dass** eine Leistenschwenkachse des ersten Leistenteils (5a) zu dem zweiten Leistenteil (5b) im Wesentlichen parallel zu der Kippachse (6) verläuft, insbesondere, dass bei eingefahrener Zustiegshilfe (2) und Türflügel (8) in Schließposition das Abdichtgummi (9) das erste Leistenteil (5a) abdichtend berührt, weiter vorzugsweise abdichtend mit dem ersten Leistenteil (5a) in Eingriff steht.

9. Zustiegssystem nach Anspruch 7 oder 8, **dadurch gekennzeichnet, dass** das Abdichtgummi (9) eine Ballondichtung (9a) ist und dass bei eingefahrener Zustiegshilfe (2) und Türflügel (8) in Schließposition die Ballondichtung (9a) eine Vorderkante (4a) der Kippleiste (4) abdichtend berührt, vorzugsweise, abdichtend mit der Vorderkante (4a) der Kippleiste (4) in Eingriff steht.

10. Zustiegssystem nach einem der Ansprüche 1 bis 9, **dadurch gekennzeichnet, dass** die Kippleiste (4) an dem Fahrzeugboden (1), insbesondere um die Kippachse (6), schwenkbar gelagert ist, vorzugsweise, dass das Zustiegssystem eine Scharniervorrichtung (11) zur schwenkbaren Lagerung der Kippleiste (4) an dem Fahrzeugboden (1) aufweist.

11. Zustiegssystem nach Anspruch 10, **dadurch gekennzeichnet, dass** die Kippleiste (4) von einer Leistenfläche (4b) der Kippleiste (4) aufragende Seitenstege (4c, d) aufweist, welche zum Abdecken eines im Wesentlichen quer zur Kippachse (6) verlaufenden jeweiligen Spaltes zwischen der Kippleiste (4) und dem Fahrzeugboden (1) bei zumindest teilweise ausgefahrener Zustiegshilfe (2) eingerichtet sind.

12. Zustiegssystem nach einem der Ansprüche 1 bis 11, **dadurch gekennzeichnet, dass** die Kippleiste (4) bei eingefahrener Zustiegshilfe (2) mit dem Fahrzeugboden (1) eine, vorzugsweise ebene, im Wesentlichen geschlossene Bodenebene (12) bildet und dass das Zustiegssystem eine Bodenabdichtanordnung (13) zum im Wesentlichen luftdichten Abdichten der Bodenebene (12) aufweist, weiter vorzugsweise, dass die Bodenabdichtanordnung (13) mit der Türabdichtanordnung (10) den Innenraum des Fahrzeugs im Wesentlichen luftdicht abdichtet.

13. Zustiegssystem nach Anspruch 12, **dadurch gekennzeichnet, dass** die Bodenabdichtanordnung (13) eine elastische Gummianordnung (14) aufweist, welche sich entlang einer Randstrecke der Kippleiste (4) erstreckt und dass die Gummianordnung (14) einen im Wesentlichen entlang der Kippachse (6) ausgerichteten Querabschnitt (14a) aufweist, weiter insbesondere, dass der Querabschnitt (14a) unterhalb der Bodenebene (12) angeordnet ist.

14. Zustiegssystem nach Anspruch 13, **dadurch gekennzeichnet, dass** der Querabschnitt (14a) im Wesentlichen entlang der Kippachse (6) verläuft, vorzugsweise, dass der Querabschnitt (14a) zum Abdichten der Bodenebene (12) fest mit dem Fahrzeugboden (1) und fest mit der Kippleiste (4) verbunden ist, insbesondere, dass der Querabschnitt (14a) von der Scharniervorrichtung (11) umfasst ist, weiter vorzugsweise, die Scharniervorrichtung (11) bildet.

15. Zustiegssystem nach einem der Ansprüche 12 bis 14, **dadurch gekennzeichnet, dass** die Gummianordnung (14) Längsabschnitte (14b, c) aufweist, welche im Wesentlichen quer zur Kippachse (6) ausgerichtet sind und welche dazu eingerichtet sind, die Bodenebene (12) bei eingefahrener Zustiegshilfe (2), insbesondere durch Eingriff mit der Kippleiste (4), im Wesentlichen luftdicht abzudichten, vorzugsweise, dass die Längsabschnitte (14b, c) an dem Fahrzeugboden (1) angeordnet sind und bei eingefahrener Zustiegshilfe (2) mit der Kippleiste (4) abdichtend in Eingriff kommen.

## Claims

1. A boarding system for a vehicle, which boarding system has a vehicle floor (1) for an interior of the vehicle and a boarding aid (2), which boarding aid (2) has a stepping surface (3) for passengers of the vehicle to step on during boarding and deboarding, wherein the boarding system has a pivotably mounted tilting strip (4) for bridging a height difference (7) between the stepping surface (3) and the vehicle floor (1), **characterized in that** the tilting strip (4) has a first strip part (5a) and a second strip part (5b) pivotably coupled to the first strip part (5a).

2. The boarding system according to claim 1, **characterized in that** the boarding system has a drive unit for retracting and extending the boarding aid (2), and that the tilting strip (4) bridges the height difference (7) when the boarding aid (2) is at least partially extended.

3. The boarding system according to claim 1 or 2, **characterized in that** the tilting strip (4), particularly when the boarding aid (2) is at least partially extended, forms a planar crossing ramp for bridging the height difference (7).

4. The boarding system according to any one of the claims 1 to 3, **characterized in that** the tilting strip (4) is pivotably mounted about a tilting axis (6), which tilting axis (6) extends substantially parallel to the stepping surface (3), preferably, that the boarding system has a pivot drive unit for pivoting, in particular on both sides, the tilting strip (4) about the tilting axis (6), in particular, that a motor of the drive unit for retracting and extending the boarding aid (2) is included in the pivot drive unit.

5. The boarding system according to claim 4, **characterized in that** at least a part of the tilting axis (4) is pivoted from a substantially horizontal position into an inclined position when the boarding aid (2) is extended, preferably, wherein an end of the tilting strip (4) distant from the tilting axis (6) is disposed underneath the tilting axis (6) in the inclined position, in particular, that at least the part of the tilting axis (4) is pivoted into the substantially horizontal position when the boarding aid (2) is retracted.

6. The boarding system according to any one of the claims 1 to 5, **characterized in that** the boarding system has a door leaf (8) for selectively exposing and covering a door opening of the vehicle in a respective opening position or closing position of the door leaf (8), wherein the boarding aid (2) is disposed underneath the door leaf (8), wherein the boarding system has a door sealing assembly (10) for sealing a door leaf gap between the tilting strip (4) and the door leaf (8) when the boarding aid (2) is retracted.

7. The boarding system according to claim 6, **characterized in that** the door sealing assembly (10) has a sealing rubber (9) which is disposed on the door leaf (8) and which contacts the tilting strip (4) in a sealing manner, preferably is in sealing engagement with the tilting strip (4), when the boarding aid (2) is retracted and the door leaf (8) is in the closed position, in particular, that the tilting strip (4), relative to the interior, is disposed on the inside relative to the door leaf (8) when the boarding aid (2) is retracted and the door leaf (8) is in the closed position.

8. The boarding system according to claim 7, **characterized in that** a strip pivoting axis of the first strip part (5a) to the second strip part (5b) extends substantially parallel to the tilting axis (6), in particular, that the sealing rubber (9) contacts the first strip part (5a) in a sealing manner, further preferably is in sealing engagement with the first strip part (5a), when the boarding aid (2) is retracted and the door leaf (8) is in the closed position.

9. The boarding system according to claim 7 or 8, **characterized in that** the sealing rubber (9) is a balloon seal (9a), and that the balloon seal (9a) contacts a front edge (4a) of the tilting strip (4) in a sealing manner, preferably is in sealing engagement with the front edge (4a) of the tilting strip (4), when the boarding aid (2) is retracted and the door leaf (8) is in the closed position.

10. The boarding system according to any one of the claims 1 to 9, **characterized in that** the tilting strip (4) is pivotably mounted on the vehicle floor (1), in particular about the tilting axis (6), preferably, that the boarding system has a hinge device (11) for pivotably mounting the tilting strip (4) on the vehicle floor (1).

11. The boarding system according to claim 10, **characterized in that** the tilting strip (4) has lateral ribs (4c, d), which rise up from a strip surface (4b) of the tilting strip (4) and which are configured for covering a respective gap between the tilting strip (4) and the vehicle floor (1), which extends substantially transversely to the tilting axis (6), when the boarding aid (2) is at least partially extended.

12. The boarding system according to any one of the claims 1 to 11, **characterized in that** the tilting strip (4) forms a preferably planar, substantially closed-off floor plane (12) with the vehicle floor (1) when the boarding aid (2) is retracted, and that the boarding system has a floor sealing assembly (13) for sealing the floor plane (12) in a substantially air-tight manner, more preferably, that the floor sealing assembly (13) seals the interior of the vehicle in a substantially air-tight manner together with the door sealing assembly (10).

13. The boarding system according to claim 12, **characterized in that** the floor sealing assembly (13) has an elastic rubber assembly (14) extending along an edge section of the tilting axis (4), and that the rubber assembly (14) has a transverse portion (14a) orientated substantially along the tilting axis (6), further in particular, that the transverse portion (14a) is disposed underneath the floor plane (12).

14. The boarding system according to claim 13, **characterized in that** the transverse portion (14a) extends substantially along the tilting axis (6), preferably, that the transverse portion (14a) is firmly connected to the vehicle floor (1) and firmly connected to the tilting strip (4) for sealing the floor plane (12), in particular, that the transverse portion (14a) is included by the hinge device (11), more preferably forms the hinge device (11).

15. The boarding system according to any one of the claims 12 to 14, **characterized in that** the rubber assembly (14) has longitudinal portions (14b, c) which are orientated substantially transversely to the tilting axis (6), and which are configured to seal the floor plane (12) in a substantially air-tight manner when the boarding aid (2) is retracted, particularly by an engagement with the tilting axis (4), preferably, that the longitudinal portions (14b, c) are disposed on the vehicle floor (1) and come into sealing engagement with the tilting strip (4) when the boarding aid (2) is retracted.

## Revendications

1. Système de montée pour un véhicule, lequel système de montée présente un plancher de véhicule (1) pour un intérieur du véhicule et une aide à la montée (2), laquelle aide à la montée (2) comprend une surface de marche (3) permettant aux passagers d'entrer dans le véhicule lors de l'entrée ou de la sortie, dans lequel ledit système de montée présente une barre de basculement (4) logée à pivotement et destinée à combler une différence de hauteur (7) entre la surface de marche (3) et le plancher de véhicule (1), **caractérisé par le fait que** la barre de basculement (4) comprend une première partie de barre (5a) et une deuxième partie de barre (5b) qui est couplée de manière pivotante à la première partie de barre (5a).

2. Système de montée selon la revendication 1, **caractérisé par le fait que** le système de montée comprend un entraînement pour rétracter et déployer ladite aide à la montée (2) et que ladite barre de basculement (4) comble la différence de hauteur (7) lorsque l'aide à la montée (2) est au moins en partie déployée.

3. Système de montée selon la revendication 1 ou 2, **caractérisé par le fait que** la barre de basculement (4), en particulier lorsque l'aide à la montée (2) est au moins en partie déployée, forme une rampe de transition plane pour combler la différence de hauteur (7).

4. Système de montée selon l'une quelconque des revendications 1 à 3, **caractérisé par le fait que** la barre de basculement (4) est logée à pivotement autour d'un axe de basculement (6), lequel axe de basculement (6) s'étend pour l'essentiel parallèlement à la surface de marche (3), de préférence que le système de montée comprend un entraînement de pivotement pour faire pivoter la barre de basculement (4) en particulier des deux côtés autour de l'axe de basculement (6), en particulier que l'entraînement de pivotement comprend un moteur de l'entraînement pour rétracter et déployer l'aide à la montée (2).

5. Système de montée selon la revendication 4, **caractérisé par le fait que**, lorsque l'aide à la montée (2) est déployée, au moins une partie de la barre de basculement (4) est pivotée d'une position sensiblement horizontale dans une position inclinée, de préférence, dans la position inclinée, une extrémité de la barre de basculement (4) qui est éloignée de l'axe de basculement (6) étant disposée au-dessous de l'axe de basculement (6), en particulier que, lorsque l'aide à la montée (2) est rétractée, au moins la partie de la barre de basculement (4) est pivotée dans la position sensiblement horizontale.

6. Système de montée selon l'une quelconque des revendications 1 à 5, **caractérisé par le fait que** le système de montée comprend un vantail de porte (8) pour libérer et recouvrir facultativement une ouverture de porte du véhicule dans une position d'ouverture ou position de fermeture respective du vantail de porte (8), dans lequel ladite aide à la montée (2) est disposée au-dessous du vantail de porte (8), dans lequel le système de montée présente un ensemble d'étanchéité de porte (10) destiné à étancher une fente de vantail de porte existant entre la barre de basculement (4) et le vantail de porte (8) lorsque l'aide à la montée (2) est rétractée.

7. Système de montée selon la revendication 6, **caractérisé par le fait que** le dispositif d'étanchéité de porte (10) comprend un caoutchouc d'étanchéité (9) qui est disposé sur le vantail de porte (8) et qui, lorsque l'aide à la montée (2) est rétractée et le vantail de porte (8) se trouve dans la position de fermeture, touche à étanchéité la barre de basculement (4), de préférence est en prise étanche avec la barre de basculement (4), en particulier que, lorsque l'aide à la montée (2) est rétractée et le vantail de porte (8) se trouve dans la position de fermeture, la barre de basculement (4) est disposée sur la face intérieure du vantail de porte (8) par rapport à l'intérieur.

8. Système de montée selon la revendication 7, **caractérisé par le fait qu'**un axe de pivotement de barre de la première partie de barre (5a) vers la deuxième partie de barre (5b) s'étend pour l'essentiel parallèlement à l'axe de basculement (6), en particulier que, lorsque l'aide à la montée (2) est rétractée et le vantail de porte (8) se trouve dans la position de fermeture, le caoutchouc d'étanchéité (9) touche à étanchéité la première partie de barre (5a), en outre de préférence est en prise étanche avec la première partie de barre (5a).

9. Système de montée selon la revendication 7 ou 8, **caractérisé par le fait que** le caoutchouc d'étanchéité (9) est un joint d'étanchéité à ballon (9a) et que, lorsque l'aide à la montée (2) est rétractée et le vantail de porte (8) se trouve dans la position de fermeture, ledit joint d'étanchéité à ballon (9a) touche à étanchéité un bord avant (4a) de la barre de basculement (4), de préférence est en prise étanche avec le bord avant (4a) de la barre de basculement (4).

10. Système de montée selon l'une quelconque des revendications 1 à 9, **caractérisé par le fait que** la barre de basculement (4) est logée à pivotement sur le plancher de véhicule (1), en particulier autour de l'axe de basculement (6), de préférence que le système de montée comprend un dispositif à charnière (11) destiné à loger à pivotement la barre de basculement (4) sur le plancher de véhicule (1).

11. Système de montée selon la revendication 10, **caractérisé par le fait que** la barre de basculement (4) présente des barrettes latérales (4c, d) faisant saillie d'une surface de barre (4b) de la barre de basculement (4), qui sont conçues pour recouvrir une fente s'étendant pour l'essentiel transversalement à l'axe de basculement (6) et existant entre la barre de basculement (4) et le plancher de véhicule (1), lorsque ladite aide à la montée (2) est au moins en partie déployée.

12. Système de montée selon l'une quelconque des revendications 1 à 11, **caractérisé par le fait que**, lorsque l'aide à la montée (2) est rétractée, la barre de basculement (4) forme avec le plancher de véhicule (1) un plan de plancher (12) de préférence plat et pour l'essentiel fermé, et que le système de montée comprend un ensemble d'étanchéité de plancher (13) destiné à étancher de manière pour l'essentiel étanche à l'air ledit plan de plancher (12), en outre de préférence que ledit ensemble d'étanchéité de plancher (13), conjointement avec ledit ensemble d'étanchéité de porte (10), rend étanche de manière pour l'essentiel étanche à l'air l'intérieur du véhicule.

13. Système de montée selon la revendication 12, **caractérisé par le fait que** ledit ensemble d'étanchéité de plancher (13) présente un ensemble de caoutchouc élastique (14) qui s'étend le long d'un tronçon de bord de la barre de basculement (4) et que l'ensemble de caoutchouc (14) présente une section transversale (14a) orientée pour l'essentiel le long de l'axe de basculement (6), en outre en particulier que ladite section transversale (14a) est disposée au-dessous du plan de plancher (12).

14. Système de montée selon la revendication 13, **caractérisé par le fait que** la section transversale (14a) s'étend pour l'essentiel le long de l'axe de basculement (6), de préférence que, pour rendre étanche le plan de plancher (12), la section transversale (14a) est solidarisée au plancher de véhicule (1) et est solidarisée à la barre de basculement (4), en particulier que la section transversale (14a) est comprise par le dispositif à charnière (11), en outre de préférence forme le dispositif à charnière (11).

15. Système de montée selon l'une quelconque des revendications 12 à 14, **caractérisé par** le fait ledit ensemble de caoutchouc (14) présente des sections longitudinales (14b, c) qui sont orientées pour l'essentiel transversalement à l'axe de basculement (6) et qui sont agencées pour rendre étanche de manière pour l'essentiel étanche à l'air le plan de plancher (12) lorsque l'aide à la montée (2) est rétractée, en particulier par prise avec la barre de basculement (4), de préférence que les sections longitudinales (14b, c) sont disposées sur le plancher de véhicule (1) et entre en prise étanche avec la barre de basculement (4) lorsque l'aide à la montée (2) est rétractée.
